(19) Europäisches Patentamt
European Patent Office
Office européen des brevets

(11) Publication number: **0 453 149 B1**

(12) # EUROPEAN PATENT SPECIFICATION

(45) Date of publication of patent specification: **15.03.95**

(51) Int. Cl.$^6$: **C08F 220/20**, C08F 220/30, C08F 220/36, G02B 1/04

(21) Application number: **91303064.9**

(22) Date of filing: **08.04.91**

(54) **Casting composition.**

(30) Priority: **20.04.90 AU 9746/90**

(43) Date of publication of application:
**23.10.91 Bulletin 91/43**

(45) Publication of the grant of the patent:
**15.03.95 Bulletin 95/11**

(84) Designated Contracting States:
**DE FR GB IT**

(56) References cited:
**EP-A- 0 269 366**
**GB-A- 2 176 794**

(73) Proprietor: **Sola International Holdings Limited**
**Sherriffs Road**
**Lonsdale**
**South Australia 5160 (AU)**

(72) Inventor: **Toh, Huan Kiak**
**24 Medway Street**
**Fullarton, South Australia 5063 (AU)**
Inventor: **Kok, Chong Meng**
**17 Georginia Street,Flagstaff Hill**
**South Australia 5159 (AU)**
Inventor: **Pittolo, Michael**
**2 Hawkes Avenue, Glenelg East**
**South Australia 5045 (AU)**

(74) Representative: **Pendlebury, Anthony et al**
**PAGE, WHITE & FARRER**
**54 Doughty Street**
**London WC1N 2LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to the manufacture of plastic optical articles such as video discs and ophthalmic lenses. The most widely used plastic ophthalmic lens material is polymerised diethylene glycol bis (allyl carbonate). This polymer has proved a satisfactory material for the manufacture of ophthalmic lenses because of a combination of features, including excellent transmission, resistance to discolouration, high strength and high impact resistance. The material has a reasonable abrasion resistance and can be coated to improve that resistance.

The manufacturing process involves the polymerisation of diethylene glycol bis (allyl carbonate) by curing the material within a pair of glass moulds sealed by a gasket and held together by a clip. The cure times are lengthy and can be as long as 16 hours or more. Such extended cute times not only mean that a large stock of glass moulds is required but that also, warehouse stocks of cast polymerised lenses are high so as to meet order requirements as they arise.

There has been a long felt need for a material which could be cast using the existing arrangements with a considerably reduced cure time while still producing a lens with all the desirable characteristics of those made with diethylene glycol bis (allyl carbonate).

Urethane acrylates and methacrylates have been widely used in the formulation of coating compositions, photosensitive compositions for making flexographic printing plates, adhesives and dental filling materials. In such formulations the urethane material is usually chosen so as to have a high viscosity and low shrinkage and forms the principle component of any formulation.

United Kingdom Patent GB 2176794A discloses copolymers including polyethylene glycol dimethacrylate and other dimethacrylates suitable for processing into optical lenses. These copolymers are claimed to have a high refractive index, a high Abbe number, reduced chromatic abberation and excellent impact strength, moldability, polishability and dyeability. Further, in Australian Patent Application 81216/87, applicant describes a cross-linkable casting composition including at least polyoxyalkylene glycol diacrylate or dimethacrylate and at least one poly functional unsaturated cross-linking agent. Whilst the lenses produced from the prior art compositions provide advances in the art, difficulties may be encountered in certain applications. For example, difficulties may be encountered in some patients in fitting lenses made from such compositions. Eye discomfort, including eye fatigue problems, may be encountered. Moreover, such lenses have been found to be cosmetically unattractive.

Accordingly, it is an object of the present invention to overcome, or at least alleviate, one or more of the difficulties related to the prior art.

Accordingly, the present invention provides a cross-linkable polymeric casting composition including

at least one polyoxy alkylene glycol diacrylate or dimethacrylate;

at least one monomer including a recurring unit derived from at least one radical-polymerisable bisphenol monomer capable of forming a homopolymer having a high refractive index; and

at least one urethane monomer having terminal acrylic and/or methacrylic groups.

The crosslinkable polymeric casting composition according to the present invention may be utilised in the preparation of an optical article. The optical article may be characterised by being thinner and/or lighter than known prior art articles whilst retaining good abrasion resistance and impact resistance.

By the term "high refractive index", as used herein, we mean a polymer having a refractive index of at least approximately 1.55, preferably 1.57 more preferably 1.60.

The at least one polyoxy alkylene glycol diacrylate or dimethacrylate compound according to the present invention may include ethylene oxide or propylene oxide repeating units in its backbone. An ethylene glycol derivative is preferred.

Preferably from approximately 6 to 14, preferably 6 to 11 alkylene oxide repeating units may be included.

A polyethylene glycol dimethacrylate is preferred. A polyethylene glycol dimethacrylate with an average molecular weight of the order of 600 is preferred. One suitable material is that sold under the trade name NKESTER 9G by SHIN NAKAMURA which has an average molecular weight of 536. The average number of ethylene oxide polymerised units is 9. Alternatively, an NK Ester 6G having an average number of 6 ethylene oxide polymerised units or NK Ester 14G having an average number of 14 ethylene oxide polymerised units may be used.

It is also possible to use mixtures of polyethylene glycol diacrylates and dimethacrylates. Mixed esters may also be used. For example, a polyethylene glycol dimethacrylate having an average number of 3 to 5 ethylene oxide polymerised units may be used in addition to the high molecular weight diacrylates and dimethacrylates described above. An NK Ester 3G or 4G may be used. The esters incuding 3 to 5 ethylene oxide polymerised units may be included to reduce the viscosity of the cross-linkable polymeric casting

composition. The esters including 3 to 5 ethylene oxide polymerised units may preferably be present in amounts of from approximately 5 to 30% by weight, preferably 20 to 30% by weight, based on the total weight of the casting composition.

The at least one polyoxy alkylene glycol diacrylate or dimethacrylate component may be present in an amount suitable to provide a viscosity of not greater than approximately 200 cps at 25°C in the final product. The diacrylate or dimethacrylate compound may be present in amounts of from approximately 5% by weight to 60% by weight based on the total weight of the casting composition. The diacrylate or dimethacrylate component is preferably present in amounts of approximately 15% by weight to 55% by weight, more preferably 20 to 45% by weight.

The dimethacrylates are more preferred than the diacrylates as the diacrylates need to be used with care, as with their greater reactivity than the corresponding dimethacrylates, distortion may be introduced into the lens blank as cast due to strain. Any particular diacrylate also tends to be more water absorbing than the corresponding dimethacrylate.

Water absorption can occur during tinting in boiling water and can result in cracking subsequent to tinting.

The at least one high index bisphenol monomer component in the cross-linkable casting composition may include recurring units capable of forming a homopolymer having a refractive index of approximately 1.55, or greater.

The high index bisphenol monomer component may be a polyacrylate or polymethacrylate ester of a bisphenol compound.

The high index bisphenol monomer may be selected from compounds

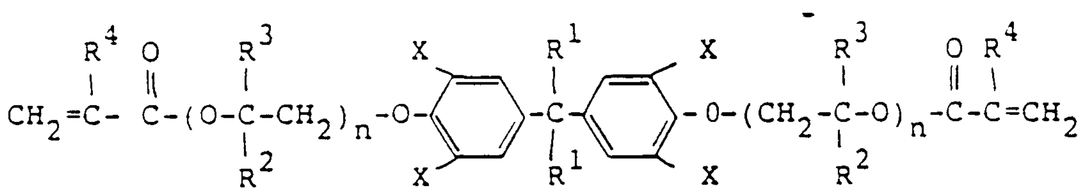

wherein $R^1$ is methyl, ethyl or hydrogen; $R^2$ is hydrogen, methyl or ethyl; $R^3$ is hydrogen, methyl or hydroxyl; $R^4$ is hydrogen, methyl or ethyl; X is a halogen, preferably chlorine, bromine or iodine, or hydrogen; and n is an integer having a value of 0 to 8.

Representative monomers of the above-described class include: dimethacrylate and diacrylate esters of bisphenol A; dimethacrylate and diacrylate esters of 4,4′bishydroxyethoxy-bisphenol A.

A preferred high index bisphenol compound is bisphenol A ethoxylated dimethacrylate. A bisphenol A ethoxylated dimethacrylate sold under the trade designation ATM20 by Ancomer has been found to be suitable. A glycidyl ester of bisphenol A sold under the trade designation Bis GMA by Freeman Chemicals has been found to be suitable. Halogenated high index bisphenol compounds which may be used include those sold under the trade designation and NK Ester 534M by Shin Nakamura. High index brominated bisphenol monomers sold under the trade designations SR803, SR804, GX6099 and GX6094 by Dai-Ichi-Kogyo Seiyaku (DKS) Co. Ltd. have also been found to be suitable.

The high index bisphenol monomer may be present in amounts of from approximately 10 to 60% by weight, preferably 20 to 55% by weight based on the total weight of the casting composition.

In addition, a secondary high index monomer other than a high index bisphenol monomer may be used in the casting composition according to the present invention in minor amounts. These include styrene, and derivatives thereof; high index acrylate and methacrylate esters including benzyl and phenyl methacrylate; n-vinyl pyrrolidone; and high index aromatic urethanes. The secondary high index monomer component may be included to modify overall refractive index of the optical article formed therefrom.

The secondary high index monomer component may be present in amounts of from 0 to approximately 20% by weight based on the total weight of the casting composition. The secondary high index monomer component is present preferably in amounts of approximately 5% to 15% by weight, more preferably approximately 5 to 10% by weight. It is preferred that the secondary high index monomer component is not present in amounts greater than 20% since the optical article formed therefrom may exhibit reduced barcol hardness and/or reduced abrasion resistance. This may be compensated for, to some degree by increasing the amount of high index bisphenol monomer used.

As stated above, the cross-linkable polymeric casting composition includes at least one urethane monomer having terminal acrylic and/or methacrylic groups. The number of such groups can vary from 2 to 6, and we have found that satisfactory materials for use in this invention are those in which the molecurar weight of the compound divided by the functionality or number of groups is 100 - 300. Suitable materials falling within this definition include materials supplied under the trade names U-4H, U-4HA and U-6HA by Shin Nakamura, NF-201 and NF-202 by Mitsubishi Rayon. These monomers are included to improve physical toughness without causing the lens material to become too brittle. Impact resistance is improved without adversely affecting abrasion resistance.

Certain urethane monomers, for example the aromatic urethane methacrylate NF202, are high refractive index components and may function alternatively or in addition as the or one of the secondary high index monomer component(s) of the casting composition.

The structures contained within any particular monomer can be selected from those containing aliphatic, aromatic, and cyclic structures of other forms. We have found that in the formulations of the present invention, the tetracrylic urethane monomer gives particularly satisfactory results.

The inclusion of the tetracrylic urethane monomer may provide a product of increased hardness.

The tetracrylic urethane monomer according to a preferred aspect of the present invention may be a compound of the formula

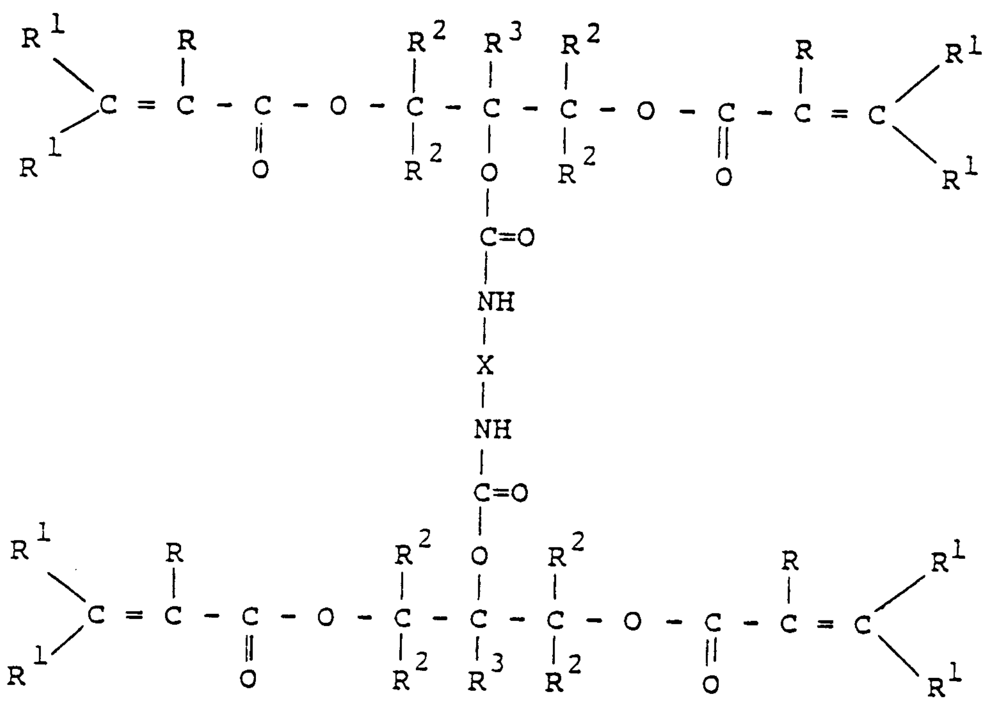

wherein R, $R^1$, $R^2$ and $R^3$ which may be the same or different are selected from hydrogen, alkyl of 1 to 6 carbon atoms or a substituted alkyl of 1 to 6 carbon atoms; and X is an organic residue having 1 to 20 carbon atoms. X may be an aliphatic, alicyclic or aromatic residue. X may be a $C_1$-$C_{20}$ alkyl, alkoxy, alkylamino, alkyl carbonyl, alkoxy carbonyl, alkylamido or alkoxy amide group.

X may be further substituted with one or more halogen or hydroxyl groups.

The urethane monomer may be present in any suitable amount to provide a desired level of hardness. The urethane monomer may be present in amounts of from approximately 2.5 to approximately 20% by weight, preferably 5 to 10% by weight based on the total weight of the casting composition.

Where X is an aromatic group, the article formed therefrom may exhibit a high refractive index and be suitable for applications where this is desirable. A urethane monomer having the following structure is preferred:

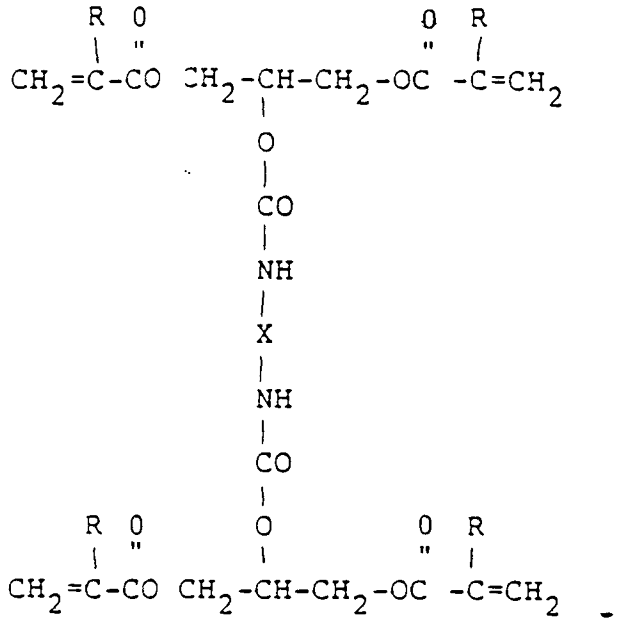

wherein R is a hydrogen atom or a methyl group or a substituted methyl group and X is an organic residue having 2 - 20 carbon atoms, preferably 6 carbon atoms.

In the above formula, while X may be any of organic residues having 2 - 20 carbon atoms, it is generally an aliphatic or alicyclic hydrocarbon residue, the backbone of which may be interrupted by oxygen. Specific examples thereof are as follows: Examples of aliphatic hydrocarbon residues include (i) alkylene groups such as $-CH_2CH_2-$, $-(CH_2)_3-$, $-(CH_2)_4-$, $-(CH_2)_6-$,

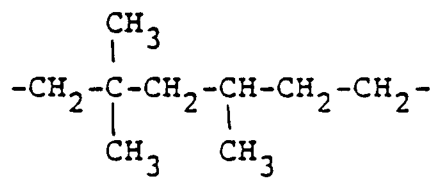

$-(CH_2)_9-$, $-(CH_2)_{18}-$, $-(CH_2)_{11}$ $-CH_2$ etc.

(ii) alkyloxyalkylene groups such as $-C_2H_40C_2H_4-$, $-(CH_2)_6-0-$ $(CH_2)_6$.

The urethane monomer may be produced by reacting 2 moles of a glycerin di(meth)acrylate

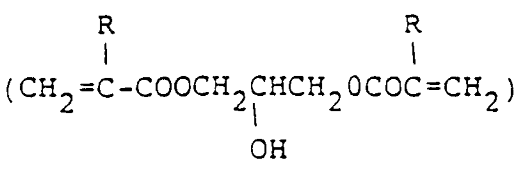

and 1 mole of an organic diisocyanate compound (OCN-X-NCO). The glycerin di(meth)acrylates are known compounds which can be obtained by reacting glycidyl (meth)acrylate and (meth)acrylic acid. The organic diisocyanate compounds are known compounds, many of which are on the market and thus easily available. The organic diisocyanate comply with the definition of X and thus their examples include ethylene diisocyanate, trimethylene diisocyanate, tetramethylene diisocyanate, hexamethylene diisocyanate, 2,2,4-trimethylhexamethylene diisocyanate. The reaction of the glycerin di(meth)acrylate and the organic diisocyanate may be conducted using a catalyst commonly used for reactions of alcohols and isocyanates (e.g. dibutyltin dilaurate) in the absence of a solvent, or by dissolving in a solvent. The solvent used is an organic solvent having no active hydrogen such as methyl chloride, benzene, toluene. The reaction is preferably carried out at a temperature of up to 100°C (generally 20° - 90°C), thereby free radical

polymerisation of the di(meth)acrylate monomer can be prevented, and a reaction time of 1 - 2 hours affords the monomer almost in a quantitive yield. After the reaction, the monomer may be obtained by removing the reaction solvent.

In a preferred aspect of the present invention the cross-linkable polymeric coating composition may further include at least one poly-functional unsaturated cross-linking agent.

The poly functional unsaturated cross-linking agent according to the present invention may be a tri- or tetrafunctional vinyl, an acrylic or methacrylic monomer. The cross-linking agent may be a short chain monomer for example trimethylol propane trimethactylate, pentaerythritol triacrylate or tetracrylate. Other polyfunctional cross-linking agents which may be used include NK Ester TMPT, NK Ester A-TMPT, NK Ester A-TMM-3, NK Ester A-TMMT, di-trimethylol propane tetraacrylate, trimethylolpropane triacrylate, pentaerythritrol tetramethacrylate, dipentaerythritol monohydroxypenta acrylate, pentaerythritol triacrylate, ethoxylated trimethylolpropane triacrylate, ethoxylated trimethylol- propane trimethacrylate.

It has been found when operating at the lower end of the preferred range 40 to 60% for the diacrylate or dimethacrylate component that it is preferable to select as the polyfunctional unsaturated cross linking agent, material such as that sold under the trade name SR-454 which is an ethoxylated trimethylol propane triacrylate.

The poly functional unsaturated cross-linking agent may be present in amounts of from approximately 5 to 20% by weight, preferably approximately 10% by weight based on the total weight of the casting composition.

The cross-linkable casting composition according to the present invention may further include a cross-linking initiator. The cross-linking initiator may be a heat and/or ultraviolet (U.V.) initiator.

The compositions are preferably cured by a combination of UV radiation and heat. The combination of UV radiation and heat may reduce the possibility of incomplete curing for example due to the phenomenon known as "radical trapping".

The composition, with the addition of approximately 0.2 to 2.0% by weight of cross-linking initiator may be exposed to UV radiation for between 0.5 and 10 seconds.

Any commercially viable UV curing system may be used. We have used a Fusion System with microwave driven lamps. A number of fusion bulbs with different output Spectra may be considered. Presently we prefer the "D" bulb and the "V" bulb.

One source we have found satisfactory is a 10 inch, 300 watt/inch mercury lamp. The mould assembly is then heated to 100 °C for one hour or the lens may be removed from the assembly and heated in air for about one hour at 100 °C. This means that fully cured lenses can be manufactured, if desired, in about one hour. Heat curing can also be used without any use of U.V. radiation.

Typically 2 - 4 passes under the UV lamps plus an hour of heat treatment at 100 °C completes the cure.

Any suitable UV initiator may be used. An initiator available under the trade designation Irgacure 184 has been found to be satisfactory. More than one curing agent may be present. It has been possible to operate with a relatively low level of initiator of between approximately 0.05 and 0.25% by weight.

A range of photoinitiators available commercially can be used, depending on sample thickness, type of UV lamp used and the absorption wavelength of the monomer mix.

The following photoinitiators have been found to be suitable.

- Alcolac Vicure 10 - isobutyl benzoin ether
- Alcolac Vicure 30 - isopropyl benzoin ether
- Alcolac Vicure 55 (V55) - methyl phenyl glyoxylate
- Ciba Geigy Irgacure 184 - 1 - hydroxy cyclohexyl phenyl ketone
- Ciba Geigy Irgacure 651 - benzildimethyl ketal
- Ciba Geigy Irgacure 907 - 2 - methyl - 1 -[4-(methylthio)phenyl] - 2 - morpholino - propanone - 1
- Merck Darocur 1664
- Rohm Catalyst 22

A mixture of two or more of the above may also be used. Additionally, combination of photoiniator mixtures or photoinitiator mixtures with a heat induced free radical initiator such as peroxides, peroxypercabonates or an azo compound may also be employed.

As an alternative to photo curing a heat curing may be used, for example 1,1 di-tert butyl peroxy -3,3,5-trimethylcyclohexane or secondary isopropyl percarbonate.

Other additives may be present which are conventionally used in casting compositions such as inhibitors, dyes, UV stabilisers and materials capable of modifying refractive index. Mould release agents can be added but they are in general not required with the compositions used in the method of the present invention. Such additives may include:

UV Absorbers including

- Ciba Geigy Tinuvin P - 2(2′-hydroxy-5′methyl phenyl) benzotriazole
- Cyanamid Cyasorb UV 531 -2-hydroxy-4-n-octoxybenzophenone
- Cyanamid Cyasorb UV5411-2(2-hydroxy-5-t-octylphenyl)-benzotriazole
- Cyanamid UV 2098 - 2 hydroxy-4-(2-acryloyloxyethoxy) benzophenone
- National S + C Permasorb MA - 2 hydroxy-4-(2 hydroxy-3-methacryloxy)propoxybenzophenone
- Cyanamid UV24 - 2,2′-dihydroxy-4-methoxybenzophenone
- BASF UVINUL 400 - 2,4 dihydroxy-benzophenone
- BASF UVINUL D-49 - 2,2′-dihydroxy-4,4′ dimethoxy-benzophenone
- BASF UVINUL D-50 - 2,2′, 4,4′ tetrahydroxy benzophenone
- BASF UVINUL D-35-ethyl-2-cyano-3,3-diphenyl acrylate
- BASF UNINYL N-539-2-ethexyl-2-cyano-3,3-diphenyl acrylate
- Ciba Geigy Tinuvin 213

Hindered amine light stabilizers (HALS), including

- Ciba Geigy Tinuvin 765/292 - bis (1,2,2,6,6-pentamethyl-4-piperidyl)sebacate
- Ciba Geigy 770 - bis (2,2,6,6-tetramethyl-4-piperidinyl) sebacate

Antioxidants including

- Ciba Geigy Irganox 245 - triethylene glycol-bis-3-(3-tert butyl-4-hydroxy-5-methyl phenyl)propionate
- Irganox 1010 -2,2-bis[[3-[3,4-bis(1,1-dimethylethyl)-4-hydroxyphenyl]-1-oxopropoxy]methyl]-1,3-propanediyl 3,5-bis (1,1-dimethyl ethyl)-4-hydroxy benzene propanoate
- Irganox 1076 - octadecyl 3-(3′,5′-di=tert=butyl(-4′-hydroxy phenyl) propionate

Anticolouring agents including

- Triphenyl phosphine
- 9, 10 dihydro-9-oxa-10-phosphaphenanthrene-1-oxide

Cure modifiers including

- Dodecyl mercaptan
- Butyl mercaptan
- Thiophenol

Other monomeric additives can be present in amounts up to 10% by weight as diluents, and include monomers such as methacrylic acid, vinyl silanes, methyl allyl, hydroxy ethyl, methacrylate. Other monomeric additives may be included to improve processing and/or material properties, these include:

- methacrylic acid, maleic anhydride, acrylic acid
- adhesion promoters/modifiers such as Sartomer 9008, Sartomer 9013, Sartomer 9015 etc.
- dye-enhancing, pH-adjusting monomers like Alcolac SIPOMER 2MIM
- a charge-reducing cationic monomer to render the material more antistatic, example Sipomer Q5-80 or Q9-75
- hydrophobic comonomers: Shin Nakamura NPG, P9-G etc. to reduce the water adsorption of the material
- viscosity modifiers

Accordingly, in a preferred aspect of the present invention the cross-linkable polymeric casting composition may further include

at least one aliphatic glycol dimethacrylate or diacrylate.

The aliphatic glycol dimethacrylate or diacrylate may function to reduce the viscosity of the composition and thus improve the processing characteristics of the composition.

An ethylene, propylene, butylene or pentylene diacrylate or methacrylate may be used. A butylene glycol dimethacrylate is preferred. One suitable material is that sold under the trade designation NK ester BD by Shin Nakamura.

A neopentyl glycol dimethactylate may be used. One suitable material is that sold under the trade designation NK ester NPG by Shin Nakamura.

The aliphatic glycol dimethacrylate or diacrylate may be present in amounts of approximately 1 to 10% by weight, preferably 2.5 to 5% by weight based on the total weight of the casting composition.

In a further aspect of the present invention there is provided a polymeric article formed from a cross linkable casting composition as described above. The polymeric article may be an optical article. The optical article may provide characteristics equal to or greater than those achievable with articles made from diethylene glycol bis(allyl carbonate) but with a considerably reduced cure time and substantially increased throughput. The optical article may be further characterised by having reduced weight and/or thickness relative to the prior art, whilst retaining good abrasion resistance and impact resistance.

The overall refractive index may be in the mid refractive index range of from approximately 1.51 to 1.57, preferably 1.53 to 1.57.

The optical articles prepared by the method of this invention include camera lenses, ophthalmic lenses and video discs.

The casting composition may be formed into a suitable article by mixing in a convenient vessel the components making up the material, and then adding the curing catalyst and/or photo-initiator. The mixed material is then degassed or filtered. As the curing time is substantially reduced the casting process may be undertaken on a continuous or semi-continuous basis.

The present invention will now be more fully described with reference to the accompanying examples. It should be understood, however, that the description following is illustrative only and should not be taken in any way as a restriction on the generality of the invention described above.

EXAMPLE 1

A cross-linkable casting composition having the following components was prepared

| | |
|---|---|
| 9G (polyethylene glycol dimethacrylate) | 45% |
| ATM20 (high index: bisphenol A ethoxylated dimethacrylate) | 46% |
| U4HA (urethane tetracrylate) | 5% |
| BD (1,3 butylene glycol dimethacrylate) | 4% |

The monomer mix was prepared in a beaker together with 0.2 % V55 as the U.V. initiator.

The casting material was used to fill the space between a pair of glass moulds separated by a plastic gasket at their periphery and held together by a clip. The mould was then passed 4 times under a U.V. lamp. This was followed by a 1 hour extended cure at 100 ° C.

EXAMPLES 2 - 14

Example 1 was repeated under similar conditions with monomer mixes as designated in Table 1 below. The results achieved are also given in Table 1. Satisfactory lenses were achieved in each case.

COMPARATIVE EXAMPLES 15 - 23

Example 1 was repeated with monomer mixes as designated in Table 1 below.

Comparative Examples 15 to 19 illustrate the contribution of the various components to the casting composition according to the present invention.

Comparative Example 15 which omits a tetracrylic urethane monomer exhibits unacceptably low barcol hardness.

Comparative Example 16 which omits a high index monomer exhibits a low refractive index and poor Impact strength.

Comparative Examples 17 to 19 illustrate the importance of the polyoxyalkylene glycol ester component for Impact strength and abrasion resistance.

Comparative Examples 20 and 21 illustrate the importance of the concentration of other high index monomers in maintaining Barcol hardness and abrasion resistance.

Comparative Examples 22 and 23 which omit a high index bisphenol compound exhibit poor abrasion and Barcol hardness.

TABLE 1

| Example | Casting Material | Density | RI | Impact | YI (1.8mm Plano) | Taber Abrasion | Barcol |
|---|---|---|---|---|---|---|---|
| 1 | 9G/ATM20/U4HA/BD 45/46/5/4 | 1.21 | 1.54 | Good | 0.9 | Good | 21 |
| 2 | 9G/ATM20/U4HA 45/45/10 | 1.21 | 1.53 | Good | 1.2 | Good | 23 |
| 3 | 9G/ATM20/U4HA 45/50/5 | 1.21 | 1.54 | Good | 0.9 | Good | 23 |
| 4 | 9G/S454/NF202/ATM20 30/20/30/20 | 1.22 | 1.53 | Good | 1.1 | Good | 34 |
| 5 | 9G/ATM20/NK534M/U4H4 35/30/25/10 | 1.30 | 1.55 | Good | 1.4 | Good | 29 |
| 6 | 9G/4G/ATM20/U4HA/BD 20/25/45/5/3 | 1.21 | 1.53 | Good | 1.2 | Good | 32 |
| 7 | 14G/S454/NF202/ATM20 30/10/40/20 | 1.22 | 1.53 | Good | 0.9 | Good | 27 |

Table 1 continued

| Example | Casting Material | Density | RI | Impact | YI (1.8mm Plano) | Taber Abrasion | Barcol |
|---|---|---|---|---|---|---|---|
| 8 | 9G/BisGMA/NF202 40/40/20 | 1.23 | 1.54 | Good | 1.3 | Good | 35 |
| 9 | 9G/BisGMA/U6HA 45/40/15 | 1.23 | 1.53 | Good | 1.6 | Good | 28 |
| 10 | 9G/NK534M/U6HA 40/40/20 | 1.39 | 1.54 | Good | 1.0 | Good | 26 |
| 11 | 9G/S454/ATM20/U6Ha 45/25/10/20 | 1.21 | 1.52 | Good | 0.9 | Good | 15 |
| 12 | 9G/S454/U6HA/ATM20 30/25/20/25 | 1.21 | 1.52 | Good | 1.05 | Good | 23 |

Table 1 continued

| Example | Casting Material | Density | RI | Impact | YI (1.8mm Plano) | Taber Abrasion | Barcol |
|---|---|---|---|---|---|---|---|
| 13 | 9G/U6HA/ATM20/BM 45/20/25/10 | 1.21 | 1.53 | Good | 0.94 | Good | 17 |
| 14 | 9G/NF202/ATM20/BM 40/20/30/10 | 1.21 | 1.54 | Good | 1.14 | Good | 23 |
| 15 * | 9G/ATM20 50/50 | 1.21 | 1.54 | Good | 1.2 | Good | 10 low |
| 16 * | 9G/U4HA 40/60 | - | 1.50 | Poor | - | Good | - |
| 17 * | U6HA/NF202/ATM20 40/20/40 | 1.23 | 1.54 | Fair | 1.3 | Poor | 51 |

Table 1 continued

| Example | Casting Material | Density | RI | Impact | YI (1.8mm Plano) | Taber Abrasion | Barcol |
|---|---|---|---|---|---|---|---|
| 18 * | S454/U6HA/ATM20 20/30/50 | 1.22 | 1.54 | Fair | 1.2 | Poor | 31 |
| 19 * | S454/NF202/ATM20 20/30/50 | 1.21 | 1.55 | Fair | 1.4 | Poor | 42 |
| 20 * | 9G/U6HA/ATM20/BM 45/20/10/25 | 1.21 | 1.53 | Fair | 0.89 | Poor | 10 low |
| 21 * | 9G/NF202/ATM20/BM 40/10/30/20 | 1.22 | 1.54 | Good | 1.4 | Poor | 17 |
| 22 * | 9G/U4HA/BM 45/10/45 | 1.21 | 1.53 | Fair | 1.18 | Poor | 0 |

Table 1 continued

| Example | Casting Material | Density | RI | Impact | YI (1.8mm Plano) | Taber Abrasion | Barcol |
|---|---|---|---|---|---|---|---|
| 23 * | 9G/U4HA/PM 45/10/45 | 1.22 | 1.54 | Fair | 1.11 | Poor | 19 |

* = Comparative Examples

## Claims

1. A cross-linkable polymeric casting composition characterised in that the composition includes: as Component (A), a polyoxyalkylene glycol diacrylate or dimethacrylate;

as Component (B), a monomer having a recurring unit derived from at least one radical-polymerisable bisphenol monomer capable of forming a homopolymer having a refractive index of more than 1.55; and

as Component (C), a urethane monomer having 2 to 6 terminal groups selected from acrylic groups and methacrylic groups.

**2.** A casting composition according to claim 1, in which Component (A) has ethylene oxide or propylene oxide repeating units in its backbone.

**3.** A casting composition according to claim 1 or 2, in which Component (A) is derived from ethylene glycol.

**4.** A casting composition according to claim 1 or 2, in which Component (A) has from 6 to 14 alkylene oxide repeating units.

**5.** A casting composition according to claim 1, 2 or 3, in which Component (A) is a polyethylene glycol dimethacrylate.

**6.** A casting composition according to any preceding claim, in which Component (A) further comprises a polyethylene glycol dimethacrylate having an average number of 3 to 5 ethylene oxide units, in amounts of from approximately 5 to 30% by weight, based on the total weight of the casting composition.

**7.** A casting composition according to any preceding claim, in which Component (A) is present in an amount of from approximately 5% by weight to 60% by weight, based on the total weight of the casting composition.

**8.** A casting composition according to any preceding claim, in which Component (B) is a polyacrylate or polymethacrylate ester of a bisphenol compound.

**9.** A casting composition according to claim 8, in which Component (B) is selected from compounds having a general formula represented by:

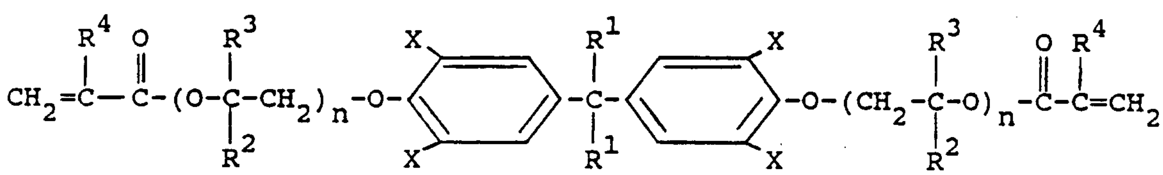

wherein $R^1$ is methyl, ethyl or hydrogen; $R^2$ is hydrogen, methyl or ethyl; $R^3$ is hydrogen, methyl or hydroxyl; $R^4$ is hydrogen, methyl or ethyl; X is a halogen, preferably chlorine, bromine or iodine, or hydrogen; and n is an integer having a value of 0 to 8.

**10.** A casting composition according to claim 9, in which Component (B) is bisphenol A ethoxylated dimethacrylate.

**11.** A casting composition according to claim 9, in which Component (B) is halogenated.

**12.** A casting composition according to any preceding claim, in which Component (B) is present in an amount of from approximately 10 to 60% by weight, based on the total weight of the casting composition.

**13.** A casting composition according to any preceding claim, in which Component (B) further comprises a secondary high index monomer other than a high index bisphenol monomer to modify overall refractive index of the optical article formed therefrom, the secondary high index monomer component being present in an amount of from 0 to approximately 20% by weight based on the total weight of the

casting composition.

**14.** A casting composition according to any preceding claim, in which Component (C) is selected from urethane monomers whose molecular weight divided by the functionality or number of groups lies in the range 100 - 300.

**15.** A casting composition according to claim 13, wherein Component (C) may function in addition as at least part of the secondary high index monomer.

**16.** A casting composition according to any one of claims 1 to 13, in which Component (C) is a tetracrylic urethane monomer selected from compounds having a general formula represented by:

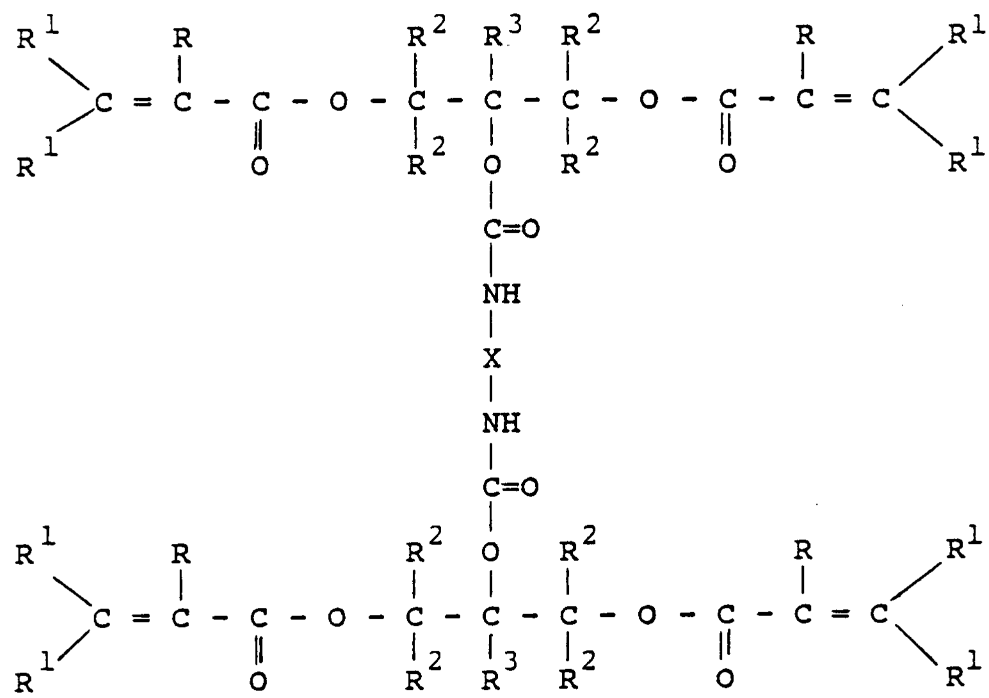

wherein R, $R^1$, $R^2$ and $R^3$ which may be the same or different are selected from hydrogen, alkyl of 1 to 6 carbon atoms or a substituted alkyl of 1 to 6 carbon atoms; and X is an organic residue having 1 to 20 carbon atoms, preferably an aliphatic, alicyclic or aromatic residue, more preferably a $C_1$-$C_{20}$ alkyl, alkoxy, alkylamino, alkyl carbonyl, alkoxy carbonyl, alkylamido or alkoxy amide group.

**17.** A casting composition according to any preceding claim, in which Component (C) is present in an amount of from approximately 2.5 to approximately 20% by weight, based on the total weight of the casting composition.

**18.** A casting composition according to any preceding claim, further comprising a poly-functional unsaturated cross-linking agent, in an amount of from approximately 5 to 20% by weight, based on the total weight of the casting composition.

**19.** A casting composition according to any preceding claim, further comprising a cross-linking initiator selected from heat initiators, ultraviolet initiators and combinations of heat and ultraviolet initiators.

**20.** A casting composition according to any preceding claim, further comprising from 1 to 10% by weight of an aliphatic glycol dimethacrylate or diacrylate.

**21.** A polymeric optical article formed from a casting composition as claimed in any one of claims 1 to 20 and having a refractive index in the mid refractive range of from approximately 1.51 to 1.57.

## Patentansprüche

1. Vernetzbare polymere Gießzusammensetzung, dadurch gekennzeichnet, daß die Zusammensetzung
als Komponente (A) ein Polyoxyalkylenglykoldiacrylat oder -dimethacrylat;
als Komponente (B) ein Monomer mit einer Wiederholungseinheit, die von mindestens einem radikalpolymerisierbaren Bisphenolmonomer abgeleitet ist, das ein Homopolymer mit einem Brechungskoeffizienten von mehr als 1,55 bilden kann; sowie
als Komponente (C) ein Urethanmonomer mit 2 bis 6 Endgruppen, ausgewählt aus Acryl- und Methacrylgruppen, enthält.

2. Gießzusammensetzung nach Anspruch 1, worin Komponente (A) Ethylenoxid- oder Propylenoxidwiederholungseinheiten in ihrem Rückgrat enthält.

3. Gießzusammensetzung nach Anspruch 1 oder 2, worin Komponente (A) von Ethylenglykol abgeleitet ist.

4. Gießzusammensetzung nach Anspruch 1 oder 2, worin Komponente (A) 6 bis 14 Alkylenoxidwiederholungseinheiten enthält.

5. Gießzusammensetzung nach Anspruch 1, 2 oder 3, worin Komponente (A) ein Polyethylenglykoldimethacrylat ist.

6. Gießzusammensetzung nach einem der vorangegangenen Ansprüche, worin Komponente (A) ferner ein Polyethylenglykoldimethacrylat mit einer Durchschnittsanzahl von 3 bis 5 Ethylenoxideinheiten in Mengen von ungefähr 5 bis 30 Gew.-% enthält, bezogen auf das Gesamtgewicht der Gießzusammensetzung.

7. Gießzusammensetzung nach einem der vorangegangenen Ansprüche, worin Komponente (A) in einer Menge von ungefähr 5 Gew.-% bis 60 Gew.-% vorliegt, bezogen auf das Gesamtgewicht der Gießzusammensetzung.

8. Gießzusammensetzung nach einem der vorangegangenen Ansprüche, worin Komponente (B) ein Polyacrylat- oder Polymethacrylatester einer Bisphenolverbindung ist.

9. Gießzusammensetzung nach Anspruch 8, worin Komponente (B) ausgewählt ist aus Verbindungen mit der allgemeinen Formel:

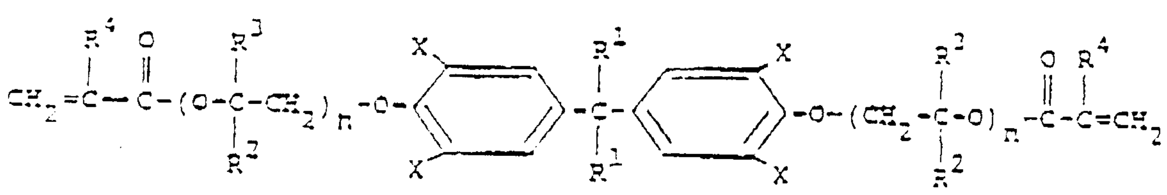

worin $R^1$ Methyl, Ethyl oder Wasserstoff, $R^2$ Wasserstoff, Methyl oder Ethyl, $R^3$ Wasserstoff, Methyl oder Hydroxyl, $R^4$ Wasserstoff, Methyl oder Ethyl, X Halogen, vorzugsweise Chlor, Brom oder Iod, oder Wasserstoff und n eine ganze Zahl mit einem Wert von 0 bis 8 darstellt.

10. Gießzusammensetzung nach Anspruch 9, worin Komponente (B) ethoxyliertes Bisphenol-A-dimethacrylat ist.

11. Gießzusammensetzung nach Anspruch 9, worin Komponente (B) halogeniert ist.

12. Gießzusammensetzung nach einem der vorangegangenen Ansprüche, worin Komponente (B) in einer Menge von ungefähr 10 bis 60 Gew.-% vorliegt, bezogen auf das Gesamtgewicht der Gießzusammensetzung.

**13.** Gießzusammensetzung nach einem der vorangegangenen Ansprüche, worin Komponente (B) ferner ein sekundäres Monomer mit hohem Koeffizienten, das kein Bisphenolmonomer mit hohem Koeffizienten ist, zur Modifizierung des Gesamtbrechungskoeffizienten des daraus gebildeten optischen Gegenstands enthält, wobei die sekundäre Monomerverbindung mit hohem Koeffizienten in einer Menge von 0 bis ungefähr 20 Gew.-% vorliegt, bezogen auf das Gesamtgewicht der Gießzusammensetzung.

**14.** Gießzusammensetzung nach einem der vorangegangenen Ansprüche, worin Komponente (c) ausgewählt ist aus Urethanmonomeren, deren durch die Funktionalität oder Anzahl von Gruppen geteiltes Molekulargewicht im Bereich von 100 - 300 liegt.

**15.** Gießzusammensetzung nach Anspruch 13, worin Komponente (C) die zusätzliche Funktion wenigstens eines Teiles des sekundären Monomers mit hohem Koeffizienten haben kann.

**16.** Gießzusammensetzung nach einem der Ansprüche 1 bis 13, worin Komponente (C) ein tetraacrylisches Urethanmonomer ist, ausgewählt aus Verbindungen mit der allgemeinen Formel

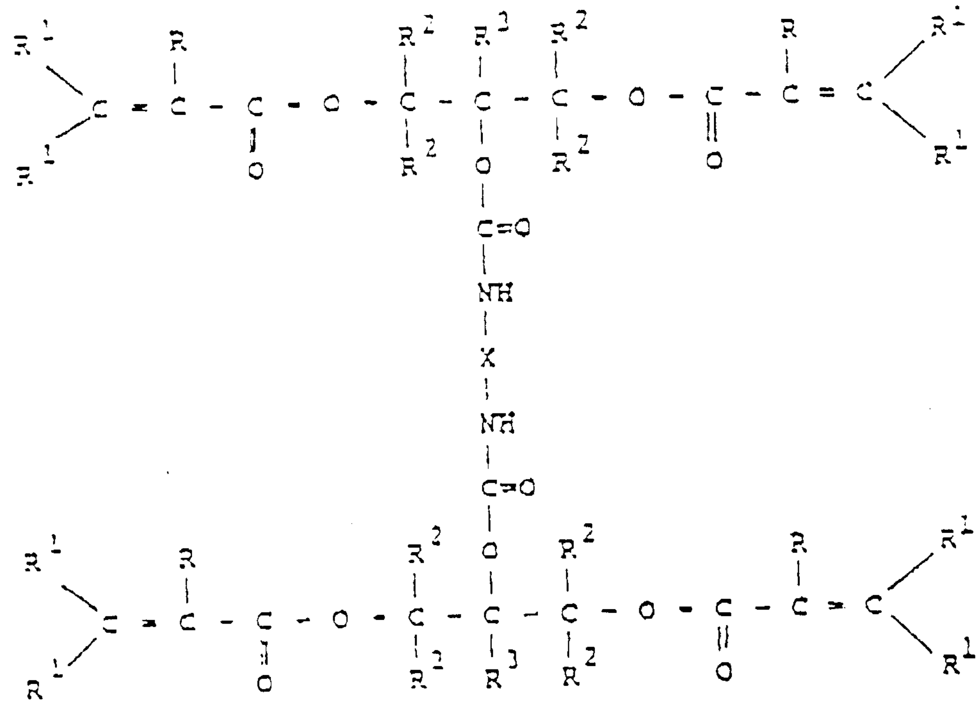

worin R, $R^1$ $R^2$ und $R^3$ die gleich oder verschieden sein können, ausgewählt sind aus Wasserstoff, Alkyl mit 1 bis 6 Kohlenstoffatomen oder einem substituierten Alkyl mit 1 bis 6 Kohlenstoffatomen, und X ein organischer Rest mit 1 bis 20 Kohlenstoffatomen ist, vorzugsweise ein aliphatischer, alizyklischer oder aromatischer Rest, noch bevorzugter eine $C_1$-$C_{20}$-Alkyl-, -Alkoxy-, -Alkylamino-, -Alkylcarbonyl-, -Alkoxycarbonyl-, -Alkylamido- oder -Alkoxyamidgruppe.

**17.** Gießzusammensetzung nach einem der vorangegangenen Ansprüche, worin Komponente (C) in einer Menge von ungefähr 2,5 bis ungefähr 20 Gew.-% vorliegt, bezogen auf das Gesamtgewicht der Gießzusammensetzung.

**18.** Gießzusammensetzung nach einem der vorangegangenen Ansprüche, die ferner ein polyfunktionelles ungesättigtes Vernetzungsmittel enthält in einer Menge von ungefähr 5 bis 20 Gew.-%, bezogen auf das Gesamtgewicht der Gießzusammensetzung.

**19.** Gießzusammensetzung nach einem der vorangegangenen Ansprüche, die ferner einen Vernetzungsinitiator enthält, ausgewählt aus Wärmeinitiatoren, Ultraviolettinitiatoren und Kombinationen von Wärme- und Ultraviolettinitiatoren.

**20.** Gießzusammensetzung nach einem der vorangegangenen Ansprüche, die ferner 1 bis 10 Gew.-% eines aliphatischen Glykoldimethacrylats oder -diacrylats enthält.

**21.** Aus einer Gießzusammensetzung nach einem der Ansprüche 1 bis 20 gebildeter, polymerer optischer Gegenstand mit einem Brechungskoeffizienten im mittleren Brechungsbereich von ungefähr 1,51 bis 1,57.

**Revendications**

**1.** Une composition de moulage à base d'un polymère réticulable caractérisée en ce que la composition comprend:

comme composant (A) un diacrylate ou diméthacrylate d'un polyoxyalcoylène glycol;

comme composant (B) un monomère présentant un motif dérivé d'au moins un monomère de bisphénol polymérisable par voie radicalaire capable de former un homopolymère ayant un indice de réfraction supérieur à 1,55; et

comme composant (C) un monomère d'uréthanne comportant 2 à 6 groupes terminaux choisis parmi les groupes acryliques et méthacryliques.

**2.** Une composition de moulage selon la revendication 1, dans laquelle le composant (A) comporte dans son squelette des motifs dérivant d'oxyde d'éthylène ou d'oxyde de propylène.

**3.** Une composition de moulage selon la revendication 1 ou 2, dans laquelle le composant (A) est un dérivé d'éthylène glycol.

**4.** Une composition de moulage selon la revendication 1 ou 2, dans laquelle le composant (A) présente de 6 à 14 motifs dérivant d'oxyde d'alcoylène.

**5.** Une composition de moulage selon la revendication 1, 2 ou 3, dans laquelle le composant (A) est un diméthacrylate de polyéthylène glycol.

**6.** Une composition de moulage selon l'une quelconque des revendications précédentes, dans laquelle le composant (A) comprend en outre un diméthacrylate de polyéthylène glycol comportant un nombre moyen de 3 à 5 unités d'oxyde d'éthylène, en des proportions d'environ 5 à 30% en poids, basés sur le poids total de la composition de moulage.

**7.** Une composition de moulage selon l'une quelconque des revendications précédentes, dans laquelle le composant (A) est présent en une proportion d'environ 5% en poids à 60% en poids, basée sur le poids total de la composition de moulage.

**8.** Une composition de moulage selon l'une quelconque des revendications précédentes, dans laquelle le composant (B) est un ester de polyacrylate ou de polyméthacrylate d'un composé de bisphénol.

**9.** Une composition de moulage selon la revendication 8, dans laquelle le composant (B) est choisi parmi les composés ayant la formule générale:

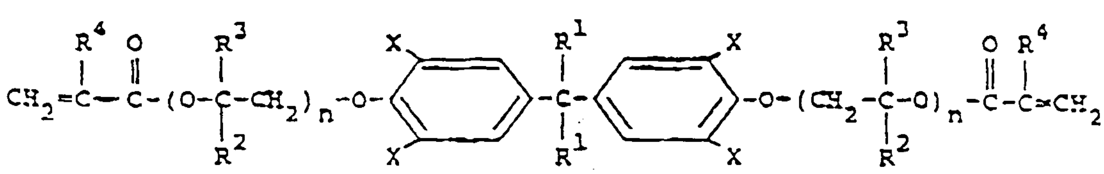

dans laquelle $R^1$ est un radical méthyle, éthyle ou de l'hydrogène

- $R^2$ est de l'hydrogène, ou un radical méthyle ou éthyle;
- $R^3$ est de l'hydrogène, ou un radical méthyle ou hydroxyle;
- $R^4$ est de l'hydrogène, ou un radical méthyle ou éthyle;
- X est un halogène, de préférence chlore, brome ou iode, ou de l'hydrogène; et
- n est un nombre entier dont la valeur est de 0 à 8.

**10.** Une composition de moulage selon la revendication 9, dans laquelle le composant (B) est le diméthacrylate de bisphénol éthoxylé.

**11.** Une composition de moulage selon la revendication 9, dans laquelle le composant (B) est un composé halogéné.

**12.** Une composition de moulage selon l'une quelconque des revendications précédentes, dans laquelle le composant (B) est présent en une proportion d'environ 10 à 60% en poids, basée sur le poids total de la composition de moulage.

**13.** Une composition de moulage selon l'une quelconque des revendications précédentes, dans laquelle le composant (B) comprend en outre un monomère secondaire à indice élevé, autre qu'un monomère de bisphénol à indice élevé, destiné à modifier l'indice de réfraction totale de l'article optique formé à partir de ladite composition, le composant monomère secondaire à indice élevé étant présent en une proportion d'environ 0 à 20% en poids, basée sur le poids total de la composition de moulage.

**14.** Une composition de moulage selon l'un quelconque des revendications précédentes, dans laquelle le composant (C) est choisi dans le groupe des monomères d'uréthanne dont le rapport du poids moléculaire par la fonctionnalité ou le nombre de groupes est compris entre 100 et 300.

**15.** Une composition de moulage selon la revendication 13, dans laquelle en outre le composant (c) peut agir comme au moins une partie du monomère secondaire à indice élevé.

**16.** Une composition de moulage selon l'une quelconque des revendications 1 à 13, dans laquelle le composant (C) est un monomère d'uréthanne tétracyclique choisi parmi les composés ayant la formule générale:

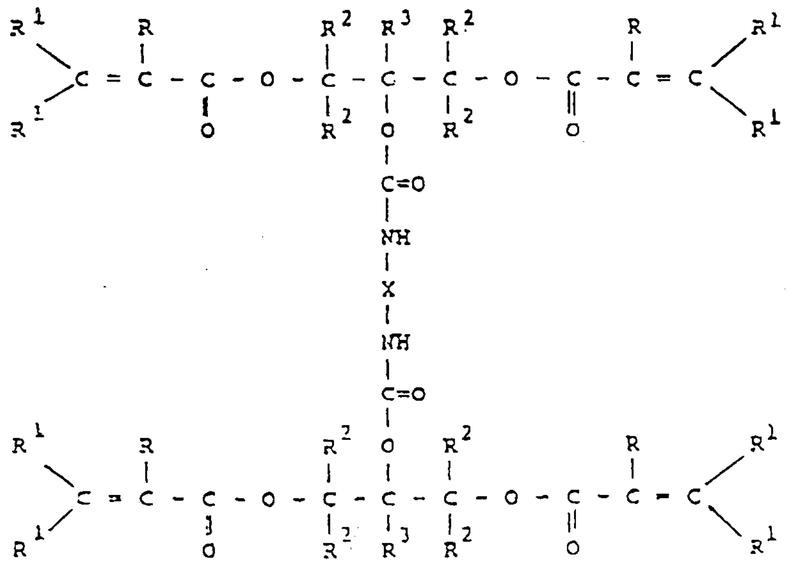

dans laquelle R, $R^1$, $R^2$ et $R^3$, qui peuvent être identiques ou différents, sont choisis dans le groupe comprenant l'hydrogène ou les radicaux alkyles comprenant 1 à 6 atomes de carbone ou les radicaux alkyles substitués comprenant 1 à 6 atomes de carbone; et X est un résidu organique ayant 1 à 20 atomes de carbone, préférablement un résidu aliphatique, alicyclique ou aromatique, plus préférablement un groupe $C_1$-$C_{20}$-alkyle, alkoxy, alkylamino, alkylcarbonyle, alkoxycarbonyle, alkylamido ou alkoxyamide.

**17.** Une composition de moulage selon l'un quelconque des revendications précédentes, dans laquelle le composant (C) est présent en une proportion d'environ 2,5 à environ 20% en poids, basée sur le poids total de la composition de moulage.

**18.** Une composition de moulage selon l'une quelconque des revendications précédentes, comprenant en plus un agent de réticulation polyfonctionnel insaturé, en une proportion d'environ 5 à 20% en poids, basée sur le poids total de la composition de moulage.

**19.** Une composition de moulage selon l'une quelconque des revendications précédentes, comprenant en plus un initiateur de réticulations choisi parmi les initiateurs thermiques, les initiateurs ultra-violets et les combinaisons de ces initiateurs thermiques et ultraviolets.

**20.** Une composition de moulage selon l'une quelconque des revendications précédentes, comprenant en plus 1 à 10% en poids de diméthacrylate ou de diacrylate d'un glycol aliphatique.

**21.** Un article optique polymère formé d'une composition de moulage telle que revendiquée selon l'une quelconque des revendications 1 à 20 et présentant un indice de réfraction moyen compris entre environ 1,51 et 1,57.